# EUROPEAN PATENT APPLICATION

(11) **EP 4 831 529 A1**
(43) Date of publication of application: **28.10.2026**
(21) Application number: 26173721.7
(22) Date of filing: 21.04.2026
(51) Int. Cl.: F16M 13/02, F16M 11/10

(54) **SYSTEM FOR POSITIONING A FLAT DISPLAY SCREEN**

(30) Priority: 23.04.2025 NL 4000063
(71) Applicant: Vogel's IP B.V., 5628 DB Eindhoven (NL)
(72) Inventor: HERPERS, Tom, EINDHOVEN (NL); SMITS, Saskia, EINDHOVEN (NL)
(74) Representative: Algemeen Octrooi- en Merkenbureau B.V.

(57) **Abstract**

System for positioning a flat display screen, comprising
- a base body with a hanging edge, and
- a connecting body which is configured to be connected to the base body and to be rigidly connected to a display screen.

The connecting body comprises
- a hook body provided with a hook body part with a, and
- a screen body which is configured to be connected to a display screen and which comprises an elongate screen body part and a first securing body with a first securing edge.

The hook body is connected to the screen body so as to be pivotable between a position of use and a tilting position.

The first securing body, or at least the first securing edge thereof, is displaceable between a first position and a second position.

The first securing body and the hook body are configured to, in an operational state of the system in which the first securing body is in the first position and the hook body is in the position of use, engage simultaneously with the hanging edge and to, after displacement of the first securing body from the first position, while the system is in the operational position, to the second position, be outside the reach of the hanging edge.

## Description

The present invention relates to a system for positioning a flat display screen, such as a flat television screen.

With flat display screens, there is a need to be able to mount these as closely as possible to a wall or the like in a relatively simple manner with the risk of damage to the flat display screen or to the wall during mounting of the flat display screen being small. In principle, this risk is greater with large display screens, for example with a diagonal of more than 50 inches, which are more difficult to handle. In addition, there is a need to reduce as much as possible the risk of a flat display screen becoming detached after mounting due to accidental external forces acting thereon. The invention aims to provide a system which satisfies these needs, whether in optional embodiments of the invention or not, and which additionally has a relatively low cost price.

To this end, the invention provides a system according to Claim 1. The description "operational state of the system" indicates the state of the system when a flat display screen has been positioned by means of the system, such as typically a flat display screen which has been mounted on a wall of a space of a user by means of the system. The various components of the system can be designed to be relatively simple and the effectiveness of the first securing body which may also have more than one first securing edge, for example exactly two first securing edges, limits the risk of the suspension hook inadvertently detaching from the hanging edge. In addition, the system offers the possibility of always keeping the flat display screen in a vertical orientation while mounting it on a wall, so that edges of the flat display screen do not have to touch the wall and, in addition, it is possible to always have a clear view of the system during mounting.

The ease of use of the system may be increased if the first securing body, which may be, for example, made of plastic, or at least the first securing edge thereof, is displaceable from the first position to the second position counter to a spring action. In one embodiment, the first securing body may be provided with two or even more first securing edges.

In a practical embodiment, the screen body comprises a spring which operates to apply a force so as to keep the first securing body, or at least the first securing edge thereof, in the first position or displace it to the first position.

The number of components of the system may be limited if the spring forms an integral part of the first securing body. Alternatively, it would also be possible to use a separate compression spring, preferably made of metal.

The spring may advantageously comprise a sprung lip which is produced, for example, by means of injection-moulding.

The ease of use of the system may also be increased if the first securing body comprises a first bevelled abutment face which is configured to come into contact with the hanging edge of the base body while pivoting the hook body from the tilting position to the position of use in order to, on account of this contact, displace the first securing body, or at least the first securing edge thereof, from the first position to the second position, counter to the action of the spring. In combination with the spring action as described above, it is thus possible to bring about the securing action with the first securing body by means of a snap lock during mounting of a flat display screen.

The reliability of the attachment of a flat display screen may be increased further if the base body is provided with a downwardly directed fixed securing edge which extends parallel to the hanging edge, and wherein the hook body is provided with a second securing body with a second securing edge, wherein the second securing body, or at least the second securing edge thereof, is displaceable between a third position and a fourth position, and is configured to engage the fixed securing edge in a securing manner in the operational state of the system, wherein the second securing body, or at least the second securing edge thereof, is in the third position and the hook body is in the position of use, and to ensure the second securing edge is outside the reach of the fixed securing edge after displacement of the second securing body from the third position, while the system is in the operational position, to the fourth position. The second securing body is in any case able to contribute to the stability of the positioning of a display screen.

The ease of use of the system may be increased if the second securing body is displaceable from the third position to the fourth position counter to a spring action.

In an advantageous embodiment, the spring action may be achieved if the second securing body is at least partly made of resilient material. In this way, the second securing body is elastically deformable, so that the elastic deformation can bring about the displacement of the second securing body between the third position and the fourth position.

In one embodiment which may be convenient from a structural perspective, the second securing body is connected to the hook body part at a bottom end of the hook body part.

A practical and moreover simple embodiment of the system may be obtained if the hook body, preferably the hook body part thereof, is provided with a stop edge which strikes against the connecting body in the tilting position of the hook body.

In order to enhance the ease of use, it may furthermore be advantageous if the second securing body comprises a second bevelled abutment face which is configured to come into contact with the fixed securing edge of the base body during pivoting of the hook body from the tilting position to the position of use in order to, on account of this contact, displace the at least one second securing edge of the securing body from the third position to the fourth position counter to a spring action. In this way, the securing action with the second securing body can be brought about by means of a snap lock during mounting of a flat display screen.

For the purpose of detaching a flat display screen again after it has been positioned, in a further embodiment, the hook body is connected to the screen body part so as to be displaceable, preferably slidable, parallel to the length direction of the screen body part between a loaded position and a load-free position, wherein the first securing edge is within reach of the hanging edge of the base body in the loaded position and the first securing edge of the first securing body is outside the reach of the hanging edge of the base body in the load-free position. The terms loaded and load-free denote the situations in which the system is either loaded or not loaded by the weight of a flat display screen, respectively. In practice, the load-free position may be brought about by a person lifting the display screen, incidentally including the connecting body or the connecting bodies which are connected to the display screen, so that the weight thereof no longer acts on the base body.

A flat display screen may be mounted relatively closely against a wall if the base body extends at least largely, preferably by at least 75% of the depth of the base body, within the depth of the connecting body in the operational state of the system. The total depth of the system in its operational state, i.e. the dimensions of the system viewed in a direction perpendicular to a display screen which has been positioned by means of the system is preferably smaller than 20 mm and more preferably smaller than 16 mm.

In a practical embodiment, the system comprises two, preferably identical, connecting bodies.

The invention will be described in more detail below with reference to the description of a possible embodiment of a system according to the invention which should not be interpreted as limiting the invention, with reference to the following figures, in which:
Figs. 1 and 3 respectively show a system according to the invention in isometric view and in side view, with the hook bodies thereof being in a tilting position;
Figs. 2 and 4 respectively show the system from Fig. 1 in isometric view and in side view, with the system being in the operational state and the hook bodies being situated in the position of use;
Fig. 5 shows a vertical cross section of a part of the system from Figs. 2 and 4 in isometric view;
Fig. 6 shows a part of the system from Figs. 1 and 3 in vertical cross section;
Fig. 7 shows the hook body part which forms part of the system in isometric view;
Fig. 8 shows an upper part of a screen body which forms part of the system in vertical longitudinal section;
Fig. 9 shows a first securing body which forms part of the system in isometric view;
Fig. 10 shows a second securing body which forms part of the system in isometric view.

Relative terms such as above, below, in front of and behind as used above and below should be interpreted from the point of view of a person looking at a display screen which has been mounted by means of the system according to the invention.

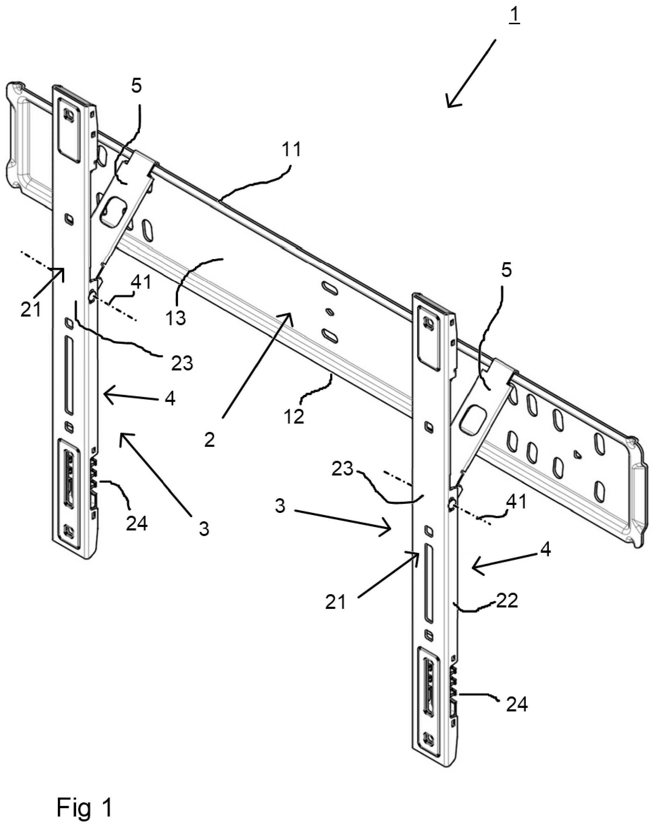

Figs. 1 to 10 relates to a system 1 according to the invention for positioning a display screen. The system comprises a base body 2, two identical connecting bodies 3. Each connecting body 3 comprises a screen body 4 and a hook body 5.

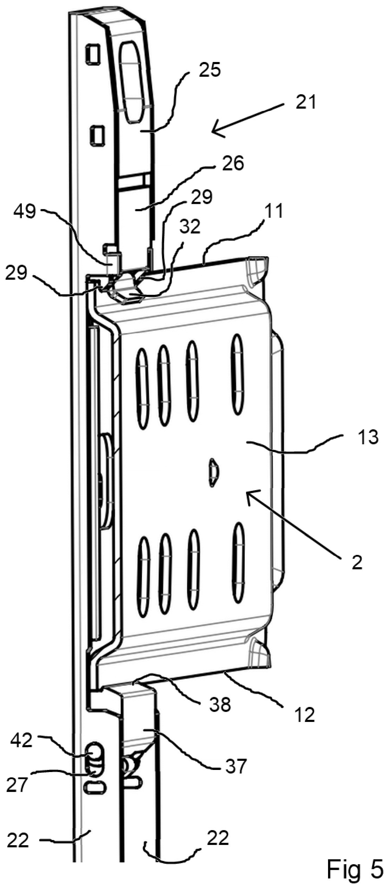

The base body 2 consists of a three-dimensional deformed elongate metal plate which is provided with a horizontally extending, upwardly directed hanging edge 11 on the top side and with a downwardly directed fixed securing edge 12 (Fig. 5) extending parallel to the hanging edge, on the bottom side. The addition "fixed" for securing edge 12 is intended to make a clear distinction with another securing edge which is still to be discussed in greater detail. Between the hanging edge 11 and the fixed securing edge 12, the base body comprises a flat fastening part 13 which is provided with several through-holes. The hanging edge 11 and the fixed securing edge 12 extend on the front side of the fastening part 13 (Fig. 5). By means of bolts or screws which extend through holes in the fastening part 13, the base body 11 may be attached to a wall or to a stand which is provided, for example, on a movable trolley, with the hanging edge 11 and the securing edge 12 remaining clear of the wall or of the stand along their entire respective lengths. The rear side of the fastening part 13 by contrast, comes to rest against the wall or the stand during mounting.

Each screen body 4 comprises an elongate folded screen body part 21. Due to being folded, the screen body part 21 has a U-shaped cross section along a part of its length in which the legs 22 of the U shape point towards the rear side of the system 1. In the body 23 of the U shape, various through-holes are provided. The holes are positioned in such a way that they can coincide with the fastening points of a flat display screen. On the rear side of a respective flat display screen, at the location of these fastening points, internal screw threads are provided in the housing of the former, often according to the VESA standard (VESA = Video Electronics Standards Association) well-known to the person skilled in the art. When mounting a flat display screen, the rear side of the flat display screen comes to lie against the front side of the body 23 of the screen body part 21.

At the bottom end of the screen body part 21, each screen body 4 is provided with a plastic wire-guiding body 24 between legs 22 which is connected to the respective screen body part 21 by means of a rivet connection. When using system 1, the wire-guiding body 24 may serve to guide wires which extend from a respective flat display screen in an orderly manner. At the location of the wire-guiding body 24, the legs 22 of the screen body part 21 are interrupted along a part of the length of the wire-guiding body 24, so that wires can pass through these interruptions.

In each of the two legs 22 of the screen body part 21, a slotted hole 27 is provided which two slotted holes 22 extend directly opposite one another.

At the upper end of the screen body part 21, each screen body 4 is provided with a plastic closure part 25 between the legs 22 and directly below with a first securing body 26, likewise made of plastic. The closure part 25 is rigidly connected to the screen body part 21 and provided with a chamber 30 on the bottom side. On the top side, the first securing body 26 is provided with an S-shaped sprung lip 28 and on the bottom side with two first securing edges 29 each of which is provided with a bevelled abutment face on the front side. In the assembled state of the screen body 4, sprung lip 28 extends within chamber 30 and bears against a wall of chamber 30 with an upper end under pretension. The sprung lip 28 thus ensures that the first securing body 26 or at least the first securing edges 29 thereof are continuously pushed downwards into a bottom position, but may also be pushed upwards into a top position counter to the action of sprung lip 28 by an external force. The first securing body 26 is retained by retaining hooks 49, the ends of which point towards each other and which extend from the legs 22.

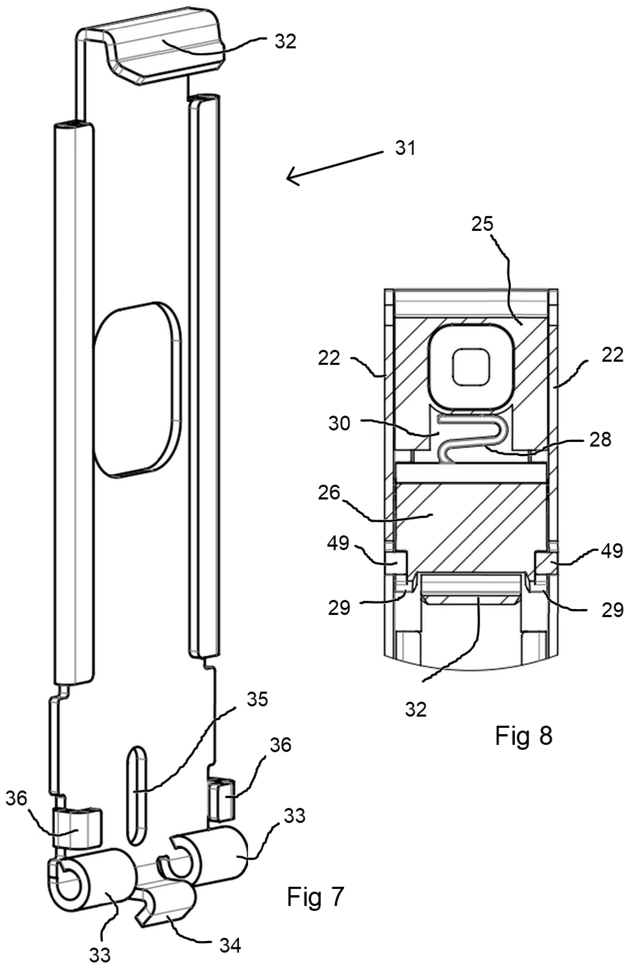

Each hook body 5 comprises an elongate hook body part 31 (Fig. 7) which consists of a three-dimensional deformed metal elongate plate. At the top end, the hook body part 31 is designed with a suspension hook 32 directed towards the rear side of the system 1 and extending in the centre of the width of the hook body part across a part of this width. At the bottom end, the hook body part is designed with two aligned horizontal eyelets 33 with a downwardly directed stop lip 34 situated in the centre between them. Directly above the stop lip 34, a slotted through-hole 35 is provided and on both sides of the hook body part 31, the hook body part 31 is provided with mutually facing retaining hooks 36 a short distance above the eyelets 31.

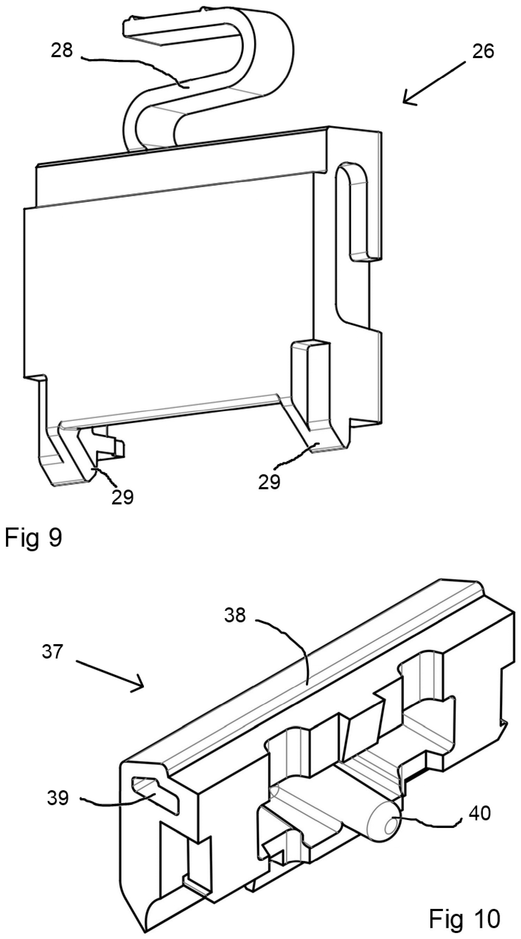

At the bottom end of each hook body part 31, each hook body 5 is provided with a second securing body 37 (Fig. 10) which is made of a flexible plastic and, on the top side, is provided with a second securing edge 38. Each second securing edge 38 has a bevelled abutment face on the front side. In order to make it easier to deform the second securing body 37 or actually to be able to move the second securing edge 38 up and down, the second securing body 37 is provided with a continuous deformation chamber 39. On the rear side, the second securing body 37 is provided with a protruding pin 40. In the assembled state, the second securing body 37 is pushed between the retaining hooks 36, with pin 40 extending in the slotted hole 35. The second securing body 37 as well as its function will be explained in more detail below.

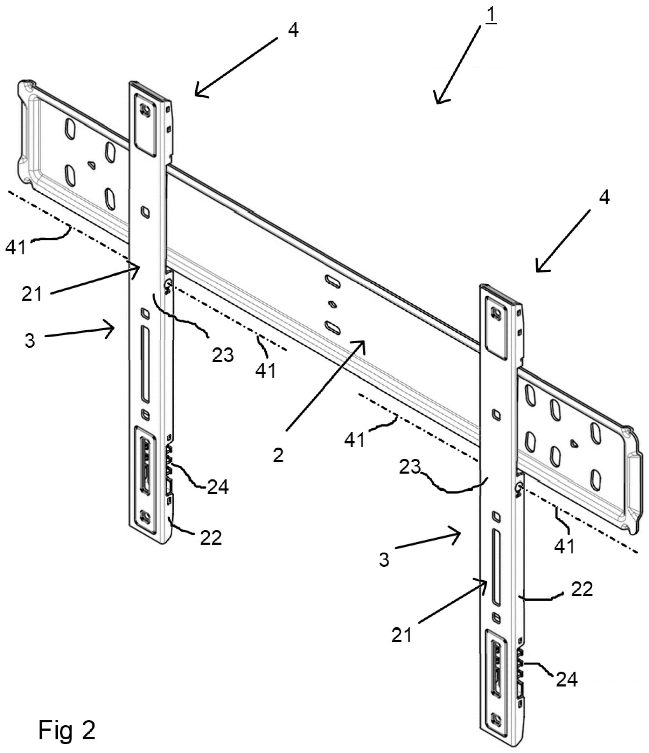

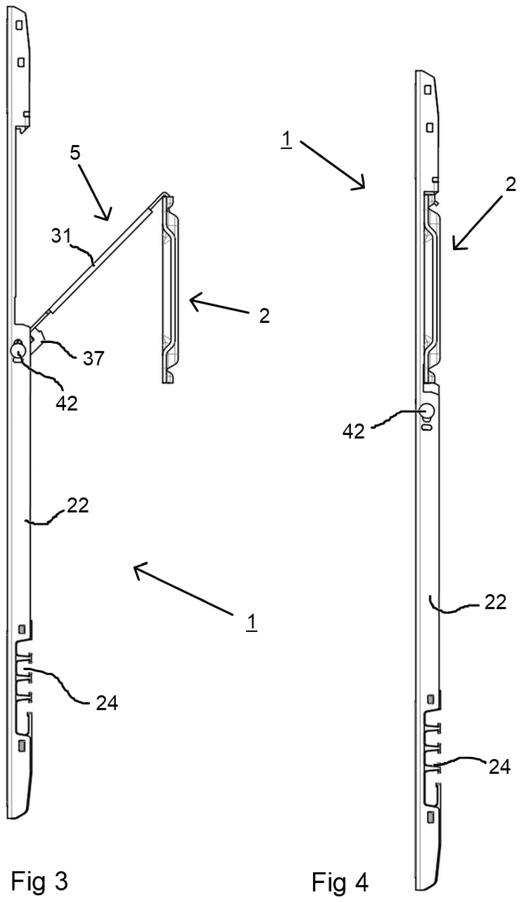

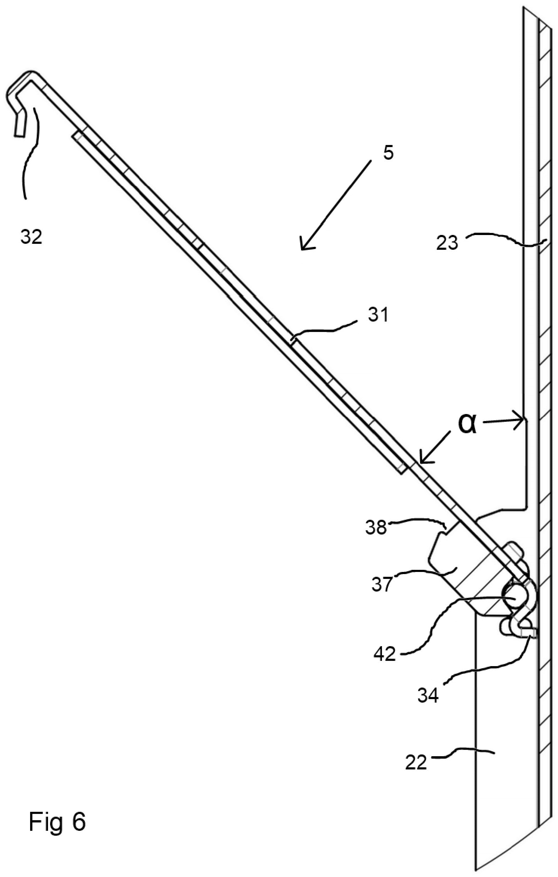

Each hook body 5 is connected to an associated screen body 4 so as to be pivotable about a pivot axis 41. To this end, the system 1 is provided with an axle body 42 whose axis coincides with the pivot axis 41 and which extends through the eyelets 33 and through the slotted holes 27. On the outer sides of the legs 22, the axle body 42 is provided with respective retaining heads, as a result of which the axle body 42 cannot escape from the eyelets 33 and the slotted holes 27. Each hook body 5 is pivotable about pivot axis 41 between a position of use (Figs. 2 and 4) in which length directions of the hook body part 31 and the screen body part 21 extend parallel to each other and a tilting position (Fig. in which length directions of the hook body part 31 and the screen body part 21 enclose an angle α, with a magnitude of circa 45 degrees, with one another. The term position of use refers to the position in which the system 1 is used to hang a flat display screen. The tilting position is a position which is assumed during hanging or removal of the flat display screen, as will become clearer below. The tilting position is determined by the end of stop lip 34 striking the front side of body 23 of screen body part 21 (Fig. 6).

The slotted holes 27 furthermore make it possible for every hook body 5 to not only be connected to an associated screen body 4 so as to be pivotable, but also to be connected to the screen body 4 so as to be slidable up and down, parallel to the length direction of the screen body part 21. The position in which the axle body 42 strikes against the upper ends of the slotted holes is referred to as the load-free position and the position in which the axle body 42 strikes against the bottom ends of the slotted holes is referred to as the loaded position.

System 1 is used as follows, based on the assumption that the base body 2 is attached to a wall which is not shown in any more detail and with the hanging edge 11 and the fixed securing edge 12 extending horizontal and parallel to the wall. In order to hang a flat display screen, the two screen bodies 4 are connected to the housing of the flat display screen by screwing bolts into the respective bodies 23 of the respective screen body parts 21 in internal screw threads which are provided in the housing of the flat display screen, via through-holes. Subsequently, the hook bodies 5 are moved to the tilting position (Figs. 1 and 3) and the suspension hooks 32 are positioned directly above the hanging edge 11, with the flat display screen, and therefore the screen body parts 21 as well, having a vertical orientation. In particular with relatively large flat display screens, for example with a diagonal of more than 50 inches, it is preferable if this is carried out by two people. Subsequently, the display screen is lowered as a result of which the suspension hooks 32 come into engagement with the hanging edge 11.

On account of the force of gravity, the hook bodies 5 will then pivot from the tilting position around the aligned pivot axes 41 to the position of use (Figs. 2 and 4) during which movement the bevelled abutment faces of the first securing edges 29 of the first securing body 26 will come into contact with the hanging edge 11. As a result thereof, the first securing edges 29 will move upwards counter to the spring action of sprung lip 28, resulting in the two first securing edges 29 moving from the front side of the hanging edge 11 to the rear side of the hanging edge 11 and again assume the bottom position on this rear side, due to the spring action. In this case, the combined weight of the flat display screen and of the two connecting bodies 3 causes the axle bodies 42 to be situated on the upper ends of the associated slotted holes 27 (Fig. 5). In this position, the first securing edges 29 extend on the rear side of the hanging edge 11 and secure the suspension via suspension hook 32 which extends between the two first securing edges 29, on hanging edge 11 in order to prevent the hook bodies 5 from inadvertently pivoting back again to or at least in the direction of the tilting position about pivot axes 41.

While the hook bodies 5 pivot towards the position of use, the flat display screen is kept in a vertical orientation. Consequently, at a certain point in time, the bevelled abutment faces of the second securing edges 38 will come into contact with the fixed securing edge 12 of the base body 2. On account of this contact and the force of gravity, the second securing bodies 37 will deform in such a way that the second securing edges 38 move downwards and are thus able to pass the fixed securing edge 12 in order to then deform again and assume a position in which the second securing edges 38 are situated on the rear side of the fixed securing edge 12. In this position, the second securing edges 38 form a further securement, namely against the flat display screen, including the connecting bodies 3, inadvertently pivoting upwards around hanging edge 11. Such a pivoting movement could, for example, take place if a force directed away from the wall were to be inadvertently applied to the bottom side of the flat display screen.

As can clearly be seen, in particular in Fig. 4, the legs 22 are interrupted at the location of the base body 2, as a result of which the base body can fully extend inside this interruption in the position of use according to Figs. 2, 4 and 5.

In order to remove the flat display screen from the wall, the flat display screen is lifted up to a limited degree, as a result of which the axle bodies 42 come to lie on the bottom ends of the slotted holes 27. This also leads to the first securing edges 29 being lifted up, so that these end up outside the reach of hanging edge 11 and the display screen, oriented vertically, can be moved away from the wall with the hook bodies 5 pivoting to the tilting position about pivot axes 41 and the flat display screen being lifted up further to a limited degree while the suspension hooks 32 remain in engagement with the hanging edge 11 (compare Fig. 3 and Fig. 4). In addition, the deformability of the second securing bodies 37 makes it possible for the second securing edges 38 to deform slightly during this movement and to move downwards in the process, so that they are able to move past the fixed securing edge 12 of the base body 2. As soon as the tilting position is reached, the flat display screen can be removed completely from the base body 2 by moving the flat display screen upwards, as a result of which the engagement of the suspension hooks 32 with the hanging edge 11 is cancelled.

In alternative embodiments, the first securing body may be designed without a sprung lip, just as the second securing body 37, but could be made of resilient material and/or the second securing body could be made of relatively stiff material, just as the first securing body 26, and could be used with a spring which may or may not be integrated in the second securing body.

## Claims

1. System (1) for positioning a flat display screen, comprising
- a base body (2) which is provided with an upwardly directed hanging edge (11),
- a connecting body (3) which is configured to be connected to the base body (2) and to be rigidly connected to a display screen,
the connecting body (3) comprising
- a hook body (5) which is provided with a hook body part (31) with a suspension hook (32) which is configured to cooperate with the hanging edge (11) in order to hang the connecting body from the base body via the hook body, and
- a screen body (4) which is configured to be connected to a display screen and which comprises an elongate screen body part (21) and a first securing body (26) which first securing body comprises a first securing edge (29) which is configured to cooperate with the hanging edge (11) in order to secure the suspension of the connecting body from the base body,
wherein the hook body (5) is connected to the screen body (4) so as to be pivotable between a position of use in which length directions of the hook body (5) and the screen body (4) extend parallel to each other and a tilting position in which length directions of the hook body (5) and the screen body (4) enclose an angle with each other,
wherein the first securing body (26), or at least the first securing edge (29) thereof, is displaceable between a first position and a second position, and
wherein the first securing body (26) and the hook body (5) are configured to, in an operational state of the system in which the first securing body (26) is in the first position and the hook body (5) is in the position of use, engage simultaneously with the hanging edge (11) and to, after displacement of the first securing body (26) from the first position, while the system is in the operational position, to the second position, be outside the reach of the hanging edge (11).

2. System according to Claim 1, wherein the first securing body, or at least the first securing edge thereof, is displaceable from the first position to the second position counter to a spring action.

3. System according to Claim 2, wherein the screen body comprises a spring which operates to apply a force so as to keep the first securing body, or at least the first securing edge thereof, in the first position or displace it to the first position.

4. System according to Claim 3, wherein the spring forms an integral part of the first securing body.

5. System according to Claim 3 of 4, wherein the spring comprises a sprung lip.

6. System according to one of the preceding claims, wherein the first securing body comprises a first bevelled abutment face which is configured to come into contact with the hanging edge of the base body while pivoting the hook body from the tilting position to the position of use in order to, on account of this contact, displace the first securing body, or at least the first securing edge thereof, from the first position to the second position counter to the action of the spring.

7. System according to one of the preceding claims, wherein the base body is provided with a downwardly directed fixed securing edge (12) which extends parallel to the hanging edge (11), and wherein the hook body (5) is provided with a second securing body (37) with a second securing edge (38), wherein the second securing body, or at least the second securing edge thereof, is displaceable between a third position and a fourth position, and is configured to engage the fixed securing edge (12) in a securing manner in the operational state of the system, in which the second securing body, or at least the second securing edge thereof, is in the third position and the hook body is in the position of use, and to ensure the second securing edge (38) is outside the reach of the fixed securing edge (12) after displacement of the second securing body (37), or at least the second securing edge (38) thereof, from the third position, while the system is in the operational position, to the fourth position.

8. System according to Claim 7, wherein the second securing body is displaceable from the third position to the fourth position counter to a spring action.

9. System according to Claim 7 or 8, wherein the second securing body is at least partly made of resilient material.

10. System according to Claim 7, 8 or 9, wherein the second securing body is connected to the hook body part at a bottom end of the hook body part.

11. System according to one of the preceding claims, wherein the hook body, preferably the hook body part thereof, is provided with a stop edge which strikes against the connecting body in the tilting position of the hook body.

12. System according to one of the preceding claims, wherein the second securing body comprises a second bevelled abutment face which is configured to come into contact with the fixed securing edge of the base body during pivoting of the hook body from the tilting position to the position of use in order to, on account of this contact, displace the at least one second securing edge of the securing body from the third position to the fourth position counter to a spring action.

13. System according to one of the preceding claims, wherein the hook body is connected to the screen body part so as to be displaceable, preferably slidable, parallel to the length direction of the screen body part between a loaded position and a load-free position, wherein the first securing edge is within reach of the hanging edge of the base body in the loaded position and the first securing edge of the first securing body is outside the reach of the hanging edge of the base body in the load-free position.

14. System according to one of the preceding claims, wherein the base body extends at least substantially, preferably by at least 75% of the depth of the base body, within the depth of the connecting body in the operational state of the system.

15. System according to one of the preceding claims, wherein the system comprises two, preferably identical, connecting bodies.
